# FASCICULE DE BREVET EUROPEEN

(11) **EP 4 186 565 B1**
(45) Date de publication et mention de la délivrance du brevet: **31.12.2025**
(21) Numéro de dépôt: 22209580.4
(22) Date de dépôt: 25.11.2022
(51) Int. Cl.: A62C 2/06, C08L 83/04, C09K 3/10, F02C 7/25, F02C 7/28, A62C 3/08, C08K 3/22, C08G 77/16, C08G 77/20

(54) **JOINT D'ÉTANCHÉITÉ POUR AÉRONEF ET AÉRONEF INCORPORANT AU MOINS UN TEL JOINT**
FLUGZEUGDICHTUNG UND FLUGZEUG MIT MINDESTENS EINER SOLCHEN DICHTUNG
SEAL FOR AIRCRAFT AND AIRCRAFT INCORPORATING AT LEAST ONE SUCH SEAL

(30) Priorité: 29.11.2021 FR 2112682
(43) Date de publication de la demande: 31.05.2023
(73) Titulaire: JPR, 75008 Paris (FR)
(72) Inventeur: TUFFERY, Romain, 80080 AMIENS (FR); PICARD, Loïc, 45200 PAUCOURT (FR)
(74) Mandataire: Plasseraud IP

(56) Documents cités:
- EP-A1- 3 674 380
- CN-A- 106 256 855
- US-A- 3 566 541
- US-A1- 2011 042 515
- US-A1- 2018 298 772
- US-A1- 2020 025 135

## Description

### Domaine technique

L'invention concerne un joint d'étanchéité pour aéronef incorporant une structure antifeu, et un aéronef incorporant au moins un tel joint entre des éléments structuraux de l'aéronef raccordés l'un à l'autre en une zone de celui-ci pouvant être une zone de feu au sens de la norme ISO 2685:1998 ou de la norme AC 20-135 de la FAA (Administration Fédérale de l'Aviation). L'invention s'applique notamment à des joints globalement tubulaires pour étanchéifier et protéger du feu des zones d'un avion ou hélicoptère choisies parmi celles de réacteurs principaux et de moteurs auxiliaires, telles qu'un moteur, une nacelle, un pylône ou un groupe auxiliaire de puissance (GAP), étant précisé que tout véhicule aérien ou spatial susceptible de présenter au moins une zone de feu est concerné par l'invention.

### Technique antérieure

Sur un aéronef, de nombreuses zones désignées comme « zones de feu » en vertu de la norme ISO 2685:1998 ou AC 20-135 requièrent d'utiliser des joints d'étanchéité conçus pour assurer deux fonctions principales, la première étant une fonction d'étanchéité dans des conditions normales de vol et la seconde étant une fonction de résistance au feu (« fire-proof » en anglais) en cas de départ ou de propagation d'un feu dans la ou chaque zone concernée de l'aéronef.

De manière connue, ces deux fonctions sont antagonistes, vu que la fonction d'étanchéité est favorisée par une souplesse accrue du joint qui lui permet d'épouser le profil des éléments structuraux au contact desquels il est monté à l'état contraint (effet de barrière à la pression) et de simplifier l'installation et la fermeture étanche du raccordement par la raideur élastique du joint, alors que la fonction de résistance au feu est au contraire favorisée par une rigidité accrue du joint en limitant son risque de perforation par la flamme (effet de barrière au feu) et en limitant la transmission de chaleur vers l'autre côté opposé à l'origine du feu.

US2020/025135 A1 présente un ensemble arrière de nacelle de turboréacteur, comprenant :
- une structure fixe d'inverseur de poussée comportant un demi-capot qui est monté sur une poutre articulée en pivotement au moyen d'une charnière, entre une position de travail et une position de maintenance, le demi-capot comportant une cloison qui cloisonne une zone poutre et qui délimite un bord appui-joint,
- un pylône de suspension de la nacelle sur lequel la structure fixe est montée mobile, le pylône formant une paroi appui-joint qui est délimitée par une face inférieure agencée en regard du bord appui-joint du demi-capot, et une face supérieure opposée,
- une trappe d'accès à la charnière du demi-capot, qui est délimitée par une face inférieure appui-joint agencée en regard de la charnière, et une face de carénage supérieur, et
- un dispositif d'étanchéité au feu qui comporte un joint d'étanchéité adapté pour assurer l'étanchéité entre une section médiane de la nacelle qui entoure une soufflante du turboréacteur et la zone poutre, le joint d'étanchéité étant réalisé en deux parties qui comprennent :
   une partie inférieure du type joint tubulaire, qui s'étend au moins en partie sur ledit bord appui-joint du demi-capot, et qui est adaptée pour coopérer avec la paroi appui-joint du pylône, et
   une partie supérieure comprenant une tôle d'étanchéité déformable élastiquement qui s'étend depuis la paroi appui-joint du pylône, jusqu'à la face inférieure de la trappe d'accès à la charnière, la tôle assurant l'étanchéité au feu entre le pylône et la trappe d'accès à la charnière.

US 2018/298772 A1 présente un ensemble pour système de propulsion d'aéronef, qui comprend un premier composant, un second composant et un ensemble d'étanchéité configuré pour étanchéifier un espace entre les premier et second composants. L'ensemble d'étanchéité comprend un élément d'étanchéité à ressort métallique et un élément d'étanchéité en élastomère. L'élément d'étanchéité à ressort métallique, monté sur le premier composant en prise étanche avec le second composant, forme une barrière aux flammes. L'élément d'étanchéité en élastomère est monté sur l'élément d'étanchéité à ressort métallique en prise étanche avec le second composant.

Les joints d'étanchéité et antifeu conçus à cet effet sont usuellement réalisés en un composite élastomère-tissu(s) par lequel est atteint un compromis souvent insatisfaisant entre ces deux fonctions, notamment pour la résistance au feu, et avec en outre un impact significatif en résultant pour les pièces environnantes des éléments structuraux étanchéifiés de l'aéronef (qui sont usuellement réalisés en matériau composite ou en titane). En effet, ces pièces doivent, d'une part, supporter la raideur du joint qu'elles contraignent sans se déformer et, d'autre part, souvent incorporer des protections thermiques pour garantir la tenue au feu de l'ensemble de la zone concernée incluant le joint et ses éléments adjacents.

US 3 566 541 A divulgue aux figures 23-28 une barrière de protection au feu en particulier pour des portes et des couvercles de containers, comprenant un joint d'étanchéité en Neoprene^{®} (polychloroprène) et une masse intumescente contenue à l'intérieur d'une cavité du joint. Le joint est prévu pour se désintégrer à une température de flamme d'environ 204° C, et la masse intumescente est prévue pour gonfler à partir de 65° C environ.

Un inconvénient majeur de cette barrière réside dans l'inadaptation du joint en polychloroprène aux températures élevées à proximité immédiate de moteurs d'aéronefs, qui en fonctionnement normal (i.e. environnement sans feu) varient usuellement entre -55 et 250° C. En effet, la masse intumescente selon ce document serait le siège d'une expansion prématurée et le joint l'incorporant serait désintégré en fonctionnement normal d'un aéronef.

EP 2 412 409 A1 divulgue un joint d'étanchéité monocorps pour clapet coupe-feu, constitué d'un matériau intumescent intégralement recouvert d'un profilé en un élastomère silicone, qui est coextrudé au contact de ce matériau intumescent et réticulé sans apport de chaleur par un rayonnement UV. Ce matériau intumescent est par exemple formé de graphite expansible ou d'un silicate, et son expansion peut débuter à une température de 100-110° C.

Un inconvénient majeur de ce joint monocorps réside également dans son inadaptation à l'environnement hors feu déjà chaud des moteurs d'aéronefs notamment pour cause d'expansion prématurée du matériau intumescent, lequel participe en outre dans ce document à l'étanchéité en l'absence de feu du fait qu'il est enserré par le joint.

### Exposé de l'invention

Un but de la présente invention est de proposer un joint d'étanchéité comprenant :
- un corps de joint au moins en partie élastomère, le corps de joint définissant au moins une cavité globalement tubulaire ou annulaire, et
- une structure antifeu qui est distincte du corps de joint et qui est disposée à l'intérieur de ladite au moins une cavité, la structure antifeu comprenant au moins une masse intumescente apte à remplir ladite au moins une cavité dans un état expansé,
qui remédie notamment aux inconvénients précités.

A cet effet, un joint d'étanchéité selon l'invention est tel que ladite au moins une masse intumescente est constituée d'une composition de caoutchouc présentant une température de déclenchement d'intumescence égale ou supérieure à 270° C, mesurée par un rhéomètre rotatif plan-plan avec un balayage en température de 23 à 380° C suivant une rampe de températures de 10° C/min. avec 1 % de déformation et avec évolution, à partir de 23° C, de la force normale Fn à partir de 0,07 N et de l'entrefer h entre plans à partir de 2 mm. Ce joint d'étanchéité selon l'invention est en outre est conçu pour raccorder deux éléments structuraux l'un à l'autre en une zone d'un aéronef qui est choisie parmi les zones de réacteurs principaux et de moteurs auxiliaires, dont la température en l'absence de feu peut varier de -55° C à 250° C et qui est désignée comme zone de feu selon la norme ISO 2685:1998 ou AC 20-135.

On notera que ce joint de l'invention intègre ainsi la fonction d'étanchéité en fonctionnement normal de l'aéronef (i.e. à une température inférieure à 270° C pouvant par exemple varier de -55 à 250° C), et les deux fonctions d'étanchéité et de barrière au feu en cas de feu dans une zone de l'aéronef à proximité immédiate du joint, grâce à l'expansion de ladite au moins une masse intumescente à partir de 270° C ou d'une température supérieure. En effet, la ou chaque masse intumescente coopère de manière synergétique à l'état expansé avec le corps de joint qu'elle remplit complètement, apportant ainsi une raideur supplémentaire à la paroi de la cavité du corps de joint contre laquelle la ou chaque masse appuie et protégeant en outre efficacement cette paroi pendant la durée du feu.

En d'autres termes, le joint de l'invention à corps de joint et masse(s) intumescente(s) séparé(s) permet d'améliorer de manière significative les performances d'étanchéité et de barrière au feu en décorrélant ces deux fonctions en fonctionnement normal de l'aéronef, du fait de la non-participation de ladite au moins une masse intumescente à la fonction d'étanchéité en fonctionnement normal qui est favorisée en n'étant remplie que par la souplesse et l'élasticité du corps de joint, alors qu'en cas de feu l'expansion de la ou chaque masse intumescente procure la double fonction d'étanchéité et de barrière au feu en conférant une rigidité accrue au corps de joint pendant la durée du feu, tout en limitant l'échauffement de la paroi du corps de joint contre laquelle elle appuie.

On notera également qu'en plus d'intégrer conjointement et de manière décorrélée ces deux fonctions antagonistes sans pénaliser l'une d'entre elles en fonctionnement normal ni en cas de feu, le joint de l'invention permet de simplifier les contraintes techniques sur les pièces environnantes. En effet, les éléments structuraux métalliques ou composites raccordés l'un à l'autre en une zone de feu de l'aéronef (telle que définie par le § 2.1 de la norme ISO 2685:1998 ou par la norme AC 20-135), peuvent avantageusement être conçus grâce au joint de l'invention avec un dimensionnement réduit en comparaison des éléments structuraux antifeu de l'art antérieur, car ce joint demeure plus souple en fonctionnement normal de l'aéronef. Et comme en cas de feu, l'expansion de la masse intumescente contribue à limiter l'échauffement de la paroi en contact du corps de joint et en outre à améliorer la tenue du joint à la traversée de la flamme vers l'autre côté (comme cela sera développé ci-après), il en résulte que ce joint de l'invention permet de supprimer en totalité ou en partie le besoin de dispositifs de protection thermique sur les éléments structuraux environnants de chaque côté du joint.

Avantageusement, ladite température de déclenchement d'intumescence peut être comprise entre 280 et 400° C, de préférence entre 320 et 360° C et par exemple entre 330 et 350° C.

On notera que ces températures sont nettement supérieures à la température maximale d'environ 250° C qui caractérise usuellement les moteurs d'aéronefs tels que des avions, notamment, ce qui améliore encore la décorrélation des deux fonctions précitées et donc la performance d'étanchéité en fonctionnement normal, vu que l'on est ainsi certain d'éviter tout début d'expansion prématuré et donc indésirable de ladite au moins une masse intumescente.

Selon une autre caractéristique de l'invention, la composition de caoutchouc peut présenter, à l'état expansé, un taux d'expansion volumique égal ou supérieur à 800 %, de préférence compris entre 820 et 950 % et par exemple entre 850 et 900 %, mesuré pendant 15 min. à 600° C ± 10° C dans un four à moufle Nabertherm^{®} N17/HR de volume utile 17 dm³ sur une éprouvette de section circulaire de 25 mm de diamètre constituée de la composition de caoutchouc. Ce taux d'expansion (%) est calculé par la formule ((E_{f}-Eᵢ)/Eᵢ).100, avec Eᵢ désignant l'épaisseur initiale de l'éprouvette égale à 2 mm et E_{f} l'épaisseur finale de l'éprouvette.

On notera que ce taux d'expansion très élevé permet avantageusement de remplir la cavité correspondante du corps de joint tout en générant l'exercice par la ou chaque masse expansée d'une force multidirectionnelle sur l'ensemble de la paroi de cette cavité, ce qui permet de conférer à cette paroi la raideur supplémentaire précitée contribuant à la fonction de barrière au feu.

On notera également que la ou chaque masse ainsi expansée par intumescence (communément appelée « char » dans l'état de l'art pour désigner le résidu alvéolaire de dégradation thermique) présente avantageusement pour ce taux d'expansion volumique une valeur suffisamment élevée (d'au moins 800 %) pour obtenir le remplissage et la raideur précitée de la paroi, mais pas excessive (de préférence inférieure à 950 %) pour que cette expansion ne pénalise pas les propriétés mécaniques du char. Ainsi, la structure antifeu formant ce char par intumescence contribue à rendre le joint d'étanchéité suffisamment résistant en cas de feu, en empêchant sa destruction par la combustion et les vibrations générées, comme cela sera développé ci-dessous.

Selon une autre caractéristique de l'invention, la composition de caoutchouc peut être à base (i.e. constituée à plus de 50 % en poids, de préférence à plus de 75 % en poids et plus préférentiellement exclusivement constituée) d'au moins un caoutchouc silicone, de préférence un phényl-vinyl-méthyl silicone (terpolymère phénylmethyl-, vinylméthyl- et diméthylsiloxane, PVMQ en abrégé).

En effet, la Demanderesse a mis en évidence que l'utilisation d'au moins un caoutchouc silicone spécifiquement de type PVMQ pour constituer majoritairement ou exclusivement en poids la matrice élastomère de la composition de la ou chaque masse intumescente, permet de manière inattendue d'augmenter significativement la stabilité thermique de la ou chaque masse (en réduisant sa perte de masse lorsque la température augmente au-delà de 600° C, par exemple), en comparaison d'autres caoutchoucs silicones tels que des vinyl-méthyl silicones (VMQ).

On notera que le caoutchouc silicone préférentiellement utilisé dans la composition de caoutchouc permet d'améliorer significativement la tenue au feu de la ou chaque masse intumescente à des températures très élevées pouvant atteindre 1100° C, typiquement, tout en répondant à la plage de température de fonctionnement du joint et des éléments structuraux qu'il raccorde dans la zone de feu concernée de l'aéronef.

On notera néanmoins que les caoutchoucs vinyl-méthyl silicones (VMQ) et fluorosilicones (FVMQ) sont également utilisables dans la composition de ladite au moins une masse intumescente, même si les PVMQ sont préférés.

Selon un mode préférentiel de réalisation de l'invention, la composition de caoutchouc comprend en outre :
- une matière organique ou inorganique expansible apte à conférer à la composition ladite température de déclenchement d'intumescence (d'au moins 270° C, de préférence entre 280 et 400° C, par exemple entre 320 et 360° C), comprenant de préférence un graphite expansible,
- un système retardateur de flamme comprenant des agents d'ignifugation,
- optionnellement une charge renforçante, et
- un système de réticulation comprenant un peroxyde.

Avantageusement, la composition de caoutchouc constituant ladite au moins une masse intumescente n'est pas totalement réticulée, pouvant être non réticulée ou bien seulement en partie réticulée. De préférence, la composition de caoutchouc qui incorpore ce système de réticulation selon une quantité réduite de peroxyde n'est que faiblement réticulée (par chauffage à une température e.g. comprise entre 160 et 220° C). En effet, la Demanderesse a constaté une amélioration significative des propriétés mécaniques du char résultant de l'expansion d'une composition selon l'invention non totalement réticulée à l'intérieur de la cavité du joint, alors qu'une composition totalement réticulée n'était pas capable de s'y expanser suffisamment.

On notera que cette composition de caoutchouc non totalement réticulée est prévue suffisamment flexible pour que la ou chaque masse intumescente puisse être insérée à l'intérieur à l'intérieur de la cavité du joint en résistant aux éventuelles déformations du joint lors des différentes phases de sa vie, incluant notamment son stockage et son montage sur l'aéronef.

Selon un exemple de réalisation de ce mode préférentiel de l'invention, la composition de caoutchouc comprend, pour 100 pce dudit au moins un caoutchouc silicone (pce : parties en poids pour 100 parties d'élastomère(s)) :
- ladite matière organique ou inorganique expansible selon une quantité comprise entre 10 et 20 pce, de préférence entre 13 et 17 pce dudit graphite expansible,
- ledit système retardateur de flamme selon une quantité comprise entre 10 et 20 pce, ledit système retardateur de flamme comprenant par exemple :
   du quartz selon une fraction massique de 15 à 40 %,
   un oxyde métallique selon une fraction massique de 15 à 40 %, tel que du dioxyde de titane,
   du diméthyl siloxane à groupe terminal diméthylvinyl selon une fraction massique de 15 à 40 %, et
   du platine selon une fraction massique inférieure à 0,02 % et de préférence comprise entre 50 et 200 ppm ;
- à titre de ladite charge renforçante optionnelle, des fibres minérales telles que des fibres de roche, selon une quantité comprise entre 18 et 28 pce ; et
- ledit peroxyde selon une quantité comprise entre 0,05 et 0,5 pce, par exemple entre 0,1 et 0,3 pce, ledit peroxyde étant de préférence un peroxyde organique aromatique et par exemple un peroxyde de dicumyle.

On notera que le quartz, l'oxyde métallique, le diméthyl siloxane à groupe terminal diméthylvinyl et le platine mentionnés ci-dessus sont cités à titre nullement limitatif, étant précisé que d'autres agents d'ignifugation choisis parmi l'hydroxyde de cérium, le diméthyl siloxane à groupe terminal hydroxy, le diméthyl, méthylvinyl siloxane à groupe terminal diméthylvinyl, le noir de carbone et des mélanges d'au moins deux de ces autres agents, sont en outre utilisables dans ledit système retardateur de flamme en étant au préalable dispersés dans une huile silicone.

On pourrait en variante utiliser dans ledit système retardateur de flamme une solution de polyphosphate d'ammonium, par exemple mélangée à du pentaérythritol et à de la mélamine, notamment.

On notera également que la quantité précitée de graphite expansible de 10-20 pce (de préférence de 13-17 pce) permet de manière inattendue d'atteindre un compromis entre le taux d'expansion volumique de la composition de caoutchouc à l'état expansé et les propriétés mécaniques obtenues pour le char généré par cette composition expansée, étant précisé qu'une augmentation de la quantité utilisée de graphite expansible a non seulement pour effet d'élever ce taux d'expansion, mais encore de diminuer les propriétés mécaniques du char.

On notera en outre que la composition de caoutchouc selon l'invention peut être dépourvue de toute charge renforçante, et que l'utilisation éventuelle dans la composition des fibres minérales précitées peut permettre de renforcer mécaniquement le char formé lors de l'expansion de cette composition, laquelle contient le peroxyde (e.g. de dicumyle) selon la quantité réduite de 0,05-0,5 pce, de préférence de 0,1-0,3 pce, pour limiter le fluage à chaud ultérieur de la composition de caoutchouc sans impacter son expansion par intumescence.

Avantageusement, la composition de caoutchouc peut présenter, à l'état non réticulé, une viscosité Mooney ML(1+4) à 40° C, mesurée selon la norme ASTM D-1646, qui est comprise entre 15 et 25 et par exemple entre 18 et 22.

On notera que ces plages de viscosité Mooney pour la composition de caoutchouc non réticulée témoignent de son aptitude à être mise en œuvre (i.e. façonnée suivant une forme déterminée) suite à son mélangeage, éventuellement avant sa réticulation partielle à chaud.

Selon un autre aspect de l'invention, la composition de caoutchouc de la ou chaque masse intumescente, à l'état expansé, est avantageusement à l'épreuve du test d'inflammabilité verticale tel que décrit dans la norme FAR25.853, Annexe F partie I (a) (1) (i), la composition de caoutchouc ne présentant alors aucune flamme résiduelle après le retrait d'une flamme à 843° C de méthane pendant un temps d'inflammation de 60 secondes.

On notera que cette absence de flamme résiduelle à l'issue de ce test d'inflammabilité verticale (dans lequel les échantillons testés sont supportés verticalement, comme précisément décrit dans cette norme FAR25.853, Annexe F partie I (b) (1) à (4)), qui peut se traduire par le fait que la composition de caoutchouc expansée et enflammée s'éteint directement après le retrait de la flamme de méthane générée par un brûleur, témoigne de l'inflammabilité réduite de la ou chaque masse intumescente selon l'invention.

Selon un mode particulier de réalisation de l'invention, la structure antifeu peut comprendre en outre une enveloppe qui est séparée du corps de joint et qui encapsule ladite au moins une masse intumescente notamment pour la protéger de fluides environnants, l'enveloppe étant par exemple à base d'un caoutchouc silicone non réticulé et pouvant former une « peau » au contact de la ou chaque masse.

On notera que cette encapsulation protectrice de la ou chaque masse intumescente par une telle enveloppe peut en outre permettre de limiter le déplacement de cette masse à l'intérieur de la cavité correspondante du joint d'étanchéité, en fonctionnement normal de l'aéronef.

Selon une autre caractéristique de l'invention, la structure antifeu peut être disposée sur une zone interne du corps de joint indépendante de l'étanchéité assurée par le joint, sans que la structure antifeu soit fixée au corps de joint.

On notera que cette non-fixation de la structure antifeu sur le corps de joint peut se traduire par une absence d'adhésion physique ou chimique entre la structure antifeu et le corps de joint, jusqu'à l'intumescence de la ou chaque masse.

Selon une autre caractéristique de l'invention, la structure antifeu peut présenter, dans un état non expansé avant intumescence de la ou chaque masse, toute géométrie par exemple globalement parallélépipédique (i.e. de type prismatique), de préférence définie dans ce cas par une largeur le long d'une dimension transversale de ladite au moins une cavité, par une hauteur perpendiculaire et inférieure à ladite largeur et par une longueur par exemple égale à celle de ladite au moins une cavité.

En variante, la structure antifeu pourrait présenter toute autre géométrie allongée s'étendant sur la longueur du corps de joint, e.g. globalement cylindrique de section circulaire ou non.

Selon une autre caractéristique de l'invention, le corps de joint peut être constitué en totalité ou en partie d'un matériau élastomère à base d'au moins un caoutchouc silicone, de préférence un terpolymère dérivé de phénylmethyl-, vinylméthyl- et diméthylsiloxane (PVMQ). Ce matériau élastomère du corps de joint peut être constitué à plus de 50 % en poids, de préférence à plus de 75 % en poids et plus préférentiellement exclusivement constitué dudit au moins un caoutchouc silicone.

On notera que le caoutchouc silicone utilisé dans le matériau élastomère du corps de joint permet d'améliorer significativement sa tenue au feu à des températures très élevées pouvant atteindre 1100° C, typiquement, dans la zone de feu concernée de l'aéronef.

On notera également que les caoutchoucs fluorosilicones (FVMQ) ne sont pas utilisables dans le matériau élastomère du corps de joint.

Selon des exemples préférentiels de réalisation de l'invention, le corps de joint est par exemple choisi parmi les joints tubulaires de section transversale en Ω, de section transversale en P, et parmi les soufflets annulaires pour conduits.

On notera que d'autres géométries sont utilisables pour le corps de joint, notamment parmi celles couramment utilisées pour les joints d'étanchéité dans l'industrie aéronautique.

Selon un mode particulier de réalisation de l'invention, le corps de joint peut être constitué dudit matériau élastomère, étant dépourvu de couche de renforcement noyée dans ledit matériau élastomère.

On notera que cette structure exclusivement élastomère du corps de joint présente l'avantage d'une fabrication simplifiée de ce dernier pouvant être mise en œuvre par une étape unique d'extrusion, par exemple.

Selon un autre mode de réalisation de l'invention, le corps de joint peut être constitué d'un composite comprenant ledit matériau élastomère et au moins une nappe d'un tissu, ladite au moins une nappe étant noyée dans ledit matériau élastomère et étant choisie parmi des tissus de verre, des tissus de polyamides aromatiques (e.g. en aramide) et leurs combinaisons.

On notera que cette structure composite du corps de joint, obtenue par un procédé usuel de confection, requiert ainsi une ou plusieurs nappes (respectivement constituées de tissus identiques ou différents), le ou chaque tissu devant présenter une résistance suffisante à des températures d'environ 1100° C lors d'un feu.

On peut par exemple utiliser une nappe unique de tissu de verre pour renforcer le corps de joint, étant précisé que ce renforcement réduit du corps de joint est avantageusement compensé par l'aptitude à l'intumescence de la structure antifeu et par les propriétés mécaniques du char obtenu après intumescence, lors de l'exposition au feu.

Selon un autre aspect général de l'invention pouvant être combiné à l'une quelconque des caractéristiques et exemples précités du joint (corps de joint et/ou structure antifeu incluses), le joint d'étanchéité est à l'épreuve du feu selon la norme ISO 2685:1998, étant capable de résister pendant 15 minutes :
- à la chaleur engendrée par une flamme calibrée de kérosène à 1100° C ± 80° C avec une densité de flux thermique absorbé par l'appareillage normalisé décrit en B.4.2 de la norme ISO 2685:1998, qui est de 116 ± 10 kW/m², et
- à des vibrations de 50 Hz et 0,8 mm pic à pic telles que décrites dans la norme ISO 2685:1998.

Un joint d'étanchéité selon l'invention est également à l'épreuve du feu selon la norme AC 20-135, étant capable de résister pendant 15 minutes :
- à la chaleur engendrée par une flamme calibrée de kérosène à 1093° C ± 83° C avec une densité de flux thermique de 105,62 ± 10 kW/m² au minimum, et
- à des vibrations de 50 Hz et 0,8 mm pic à pic.

On notera que cette résistance satisfaisante à la chaleur et aux vibrations pendant les 15 minutes du test de feu, tel que précisément décrit dans la norme ISO 2685:1998 ou AC 20-135, témoigne du fait que la combinaison selon l'invention du corps de joint et de la structure antifeu formant le char précité par intumescence permet de rendre le joint suffisamment résistant en cas de feu, en empêchant sa destruction ou désintégration par la combustion et les vibrations générées par le feu.

Un aéronef selon l'invention, en particulier un avion ou un hélicoptère, comprend :
- au moins une paire d'éléments structuraux métalliques ou composites conçus pour être raccordés l'un à l'autre en au moins une zone de l'aéronef désignée comme zone de feu par exemple selon le § 2.1 de la norme ISO 2685:1998 ou AC 20-135, ladite au moins une zone étant de préférence choisie parmi les zones de réacteurs principaux et de moteurs auxiliaires de l'aéronef, comme par exemple les zones d'un moteur, d'une nacelle, d'un pylône et/ou d'un groupe auxiliaire de puissance (GAP en français, APU en anglais pour « Auxiliary Power Unit »), et
- au moins un joint d'étanchéité qui relie de manière étanche les éléments structuraux de ladite au moins une paire l'un à l'autre,
et selon l'invention ledit au moins un joint d'étanchéité est tel que défini ci-dessus.

On notera que ladite au moins une zone de feu de l'aéronef, tel qu'un véhicule aérien ou spatial, pourrait être définie d'une autre manière que selon la norme ISO 2685:1998 ou AC 20-135, et qu'elle pourrait ainsi se rapporter à d'autres zones que celles identifiées ci-dessus.

### Brève description des dessins

D'autres caractéristiques, avantages et détails de la présente invention ressortiront à la lecture de la description suivante de plusieurs exemples de réalisation de l'invention, donnés à titre illustratif et non limitatif en relation avec les dessins joints, parmi lesquels :
**Fig. 1**

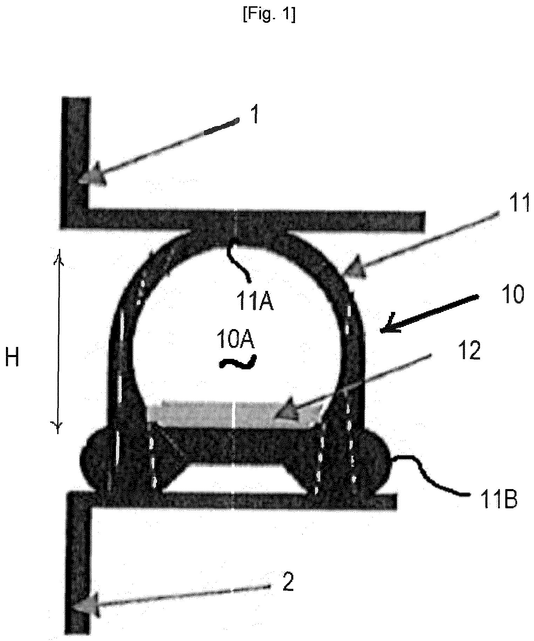

   [fig. 1] est une vue schématique en section transversale d'un joint d'étanchéité en Ω selon un exemple de l'invention monté entre et contre deux éléments structuraux à étanchéifier dans un aéronef, en fonctionnement normal du joint (i.e. sans feu dans l'aéronef), la structure antifeu du joint étant non expansée.
**Fig. 2**

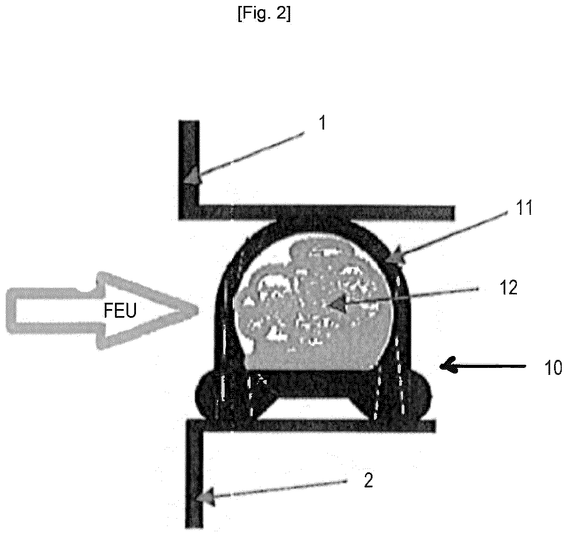

   [fig. 2] est une vue schématique en section transversale du joint d'étanchéité de la figure 1 formant une barrière au feu lors d'un feu dans l'aéronef, la structure antifeu du joint étant expansée.
**Fig. 3**

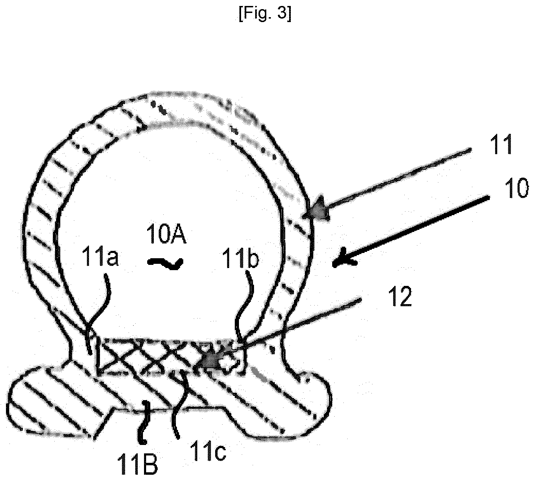

   [fig. 3] est une vue schématique en section transversale d'un joint d'étanchéité en Ω selon l'invention similaire à l'exemple de la figure 1 en fonctionnement normal du joint, la structure antifeu du joint étant non expansée.
**Fig. 4**

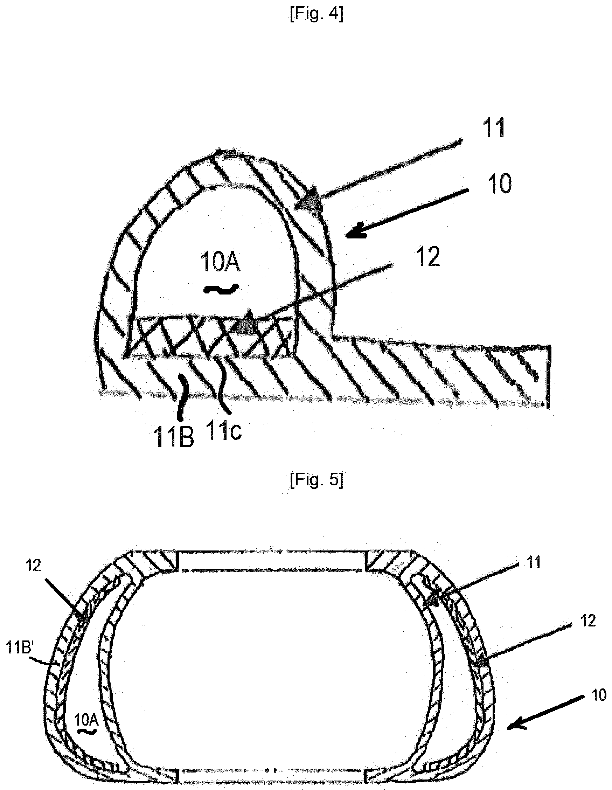

   [fig. 4] est une vue schématique en section transversale d'un joint d'étanchéité en P selon une variante de l'invention, en fonctionnement normal du joint, la structure antifeu du joint étant non expansée.
**Fig. 5**
   [fig. 5] est une vue schématique en section transversale d'un joint d'étanchéité selon une autre variante de l'invention formant un soufflet pour conduits, en fonctionnement normal du joint, la structure antifeu du joint étant non expansée.
**Fig. 6**

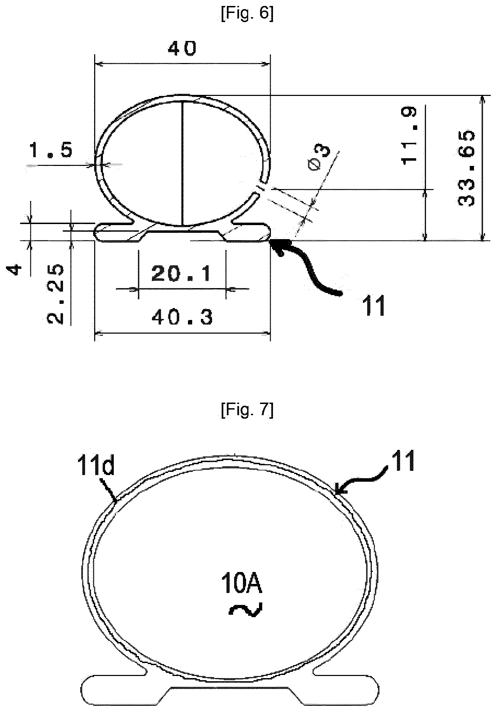

   [fig. 6] est une vue de détail en section transversale d'un corps de joint d'étanchéité similaire à celui de la figure 1, le joint étant montré au repos et dépourvu de structure antifeu avec ses dimensions exprimées en mm.
**Fig. 7**
   [fig. 7] est une vue schématique en section transversale d'un joint d'étanchéité « témoin » au repos constitué du corps de joint de la figure 6 sans structure antifeu, ce joint « témoin » ayant fait l'objet de tests de feu selon la norme ISO 2685:1998.
**Fig. 8**

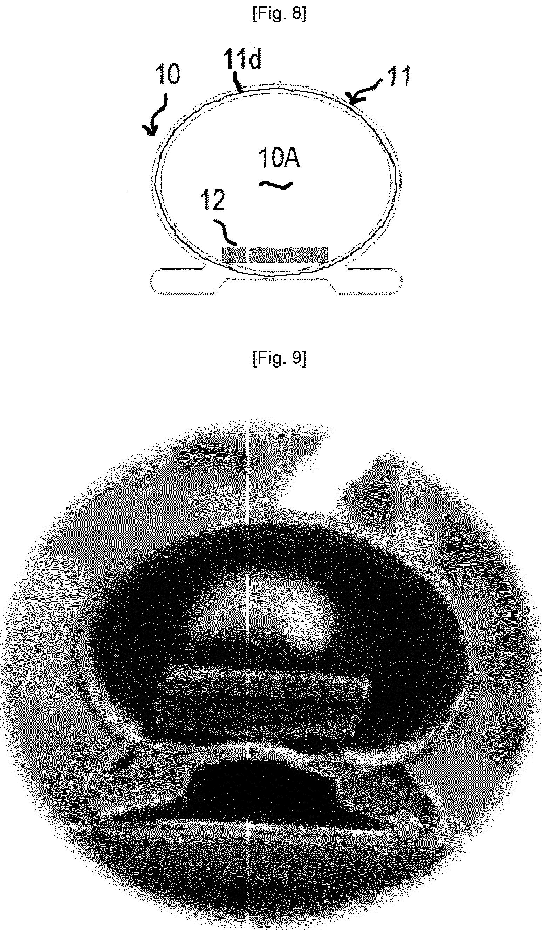

   [fig. 8] est une vue schématique en section transversale d'un joint d'étanchéité selon l'invention au repos constitué du corps de joint de la figure 6 et d'une structure antifeu, ce joint ayant également fait l'objet de tests de feu selon la norme ISO 2685:1998.
**Fig. 9**
   [fig. 9] est une photographie montrant une extrémité ouverte du joint d'étanchéité de la figure 8 à l'état déformé sur sa base inférieure, laquelle est surmontée de la structure antifeu non expansée.
**Fig. 10**

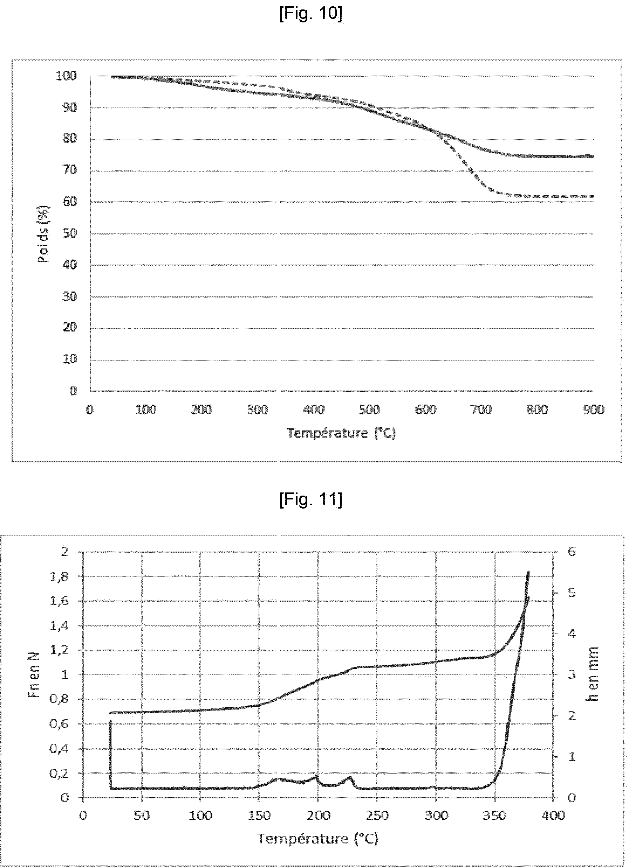

   [fig. 10] est un graphique illustrant l'évolution en fonction de la température, mesurée par analyse thermogravimétrique (ATG), du poids d'une première composition selon l'invention à base d'un caoutchouc silicone PVMQ (courbe en trait plein), en comparaison d'une seconde composition selon l'invention à base d'un caoutchouc silicone VMQ (courbe en pointillés), chaque composition constituant une structure antifeu du joint des figures 8-9 et du char en résultant.
**Fig. 11**
   [fig. 11] est un graphique illustrant l'évolution en fonction de la température, mesurée via une analyse par un rhéomètre plan/plan, de la force normale Fn (courbe inférieure) et de la distance h inter-plateaux (courbe supérieure) de la première composition de caoutchouc selon l'invention à base d'un PVMQ constituant la structure antifeu du joint des figures 8-9 et du char en résultant.
**Fig. 12**

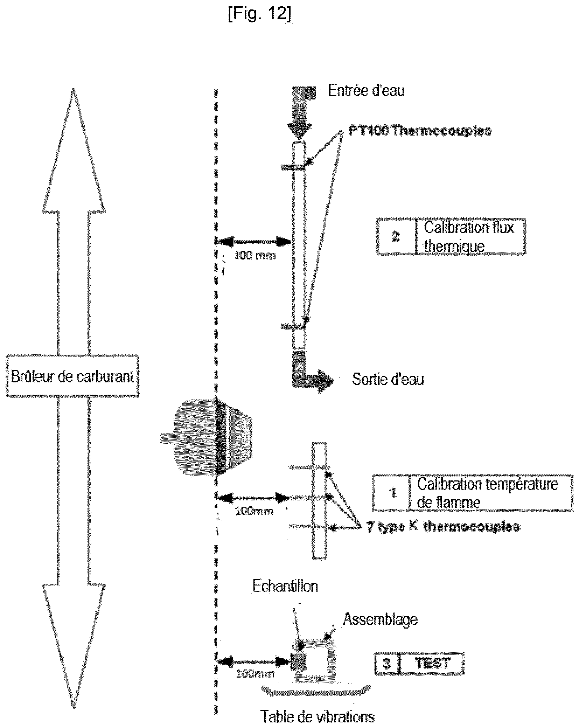

   [fig. 12] est une vue schématique d'un banc d'essais de feu selon la norme ISO 2685:1998 utilisé pour les test de feu sur les joints « témoin » et selon l'invention des figures 7 et 8-9, montrant un échantillon de joint, le brûleur et les principaux dispositifs et étapes correspondantes utilisés dans ce banc d'essais.
**Fig. 13**

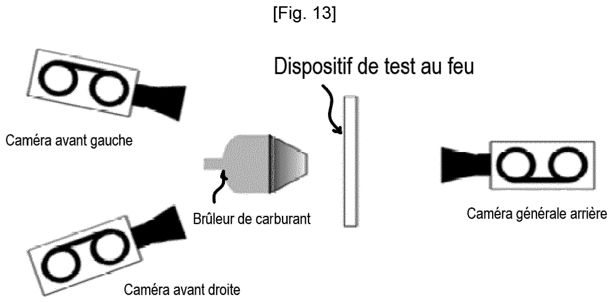

   [fig. 13] est une vue schématique d'un système de caméras disposé des deux côtés du dispositif de test, à l'intérieur du banc d'essais de la figure 12.
**Fig. 14**

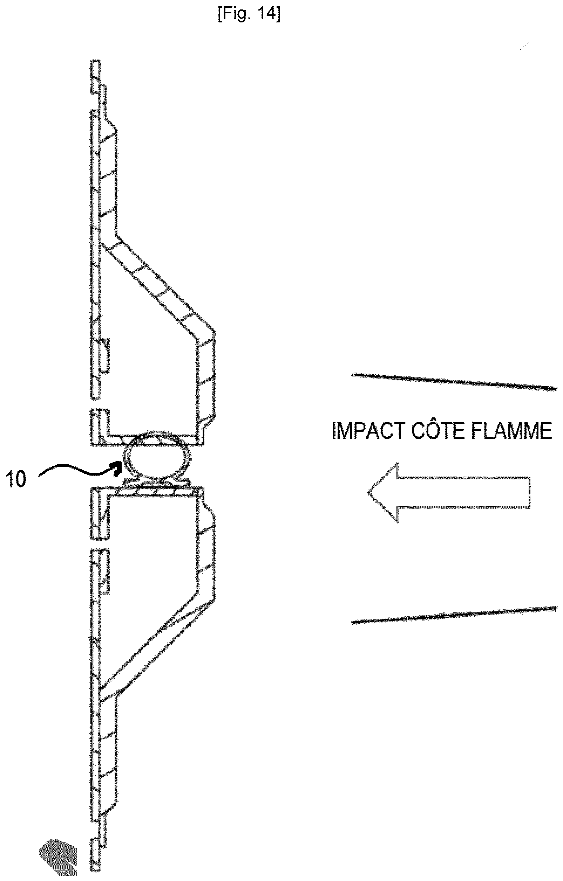

   [fig. 14] est une vue de détail du banc d'essais de la figure 12 montrant deux éléments structuraux de mise en compression de chaque échantillon de joint « témoin » ou selon l'invention, et la direction de l'impact de flamme générée par le brûleur lors de chaque test de feu.
**Fig. 15**

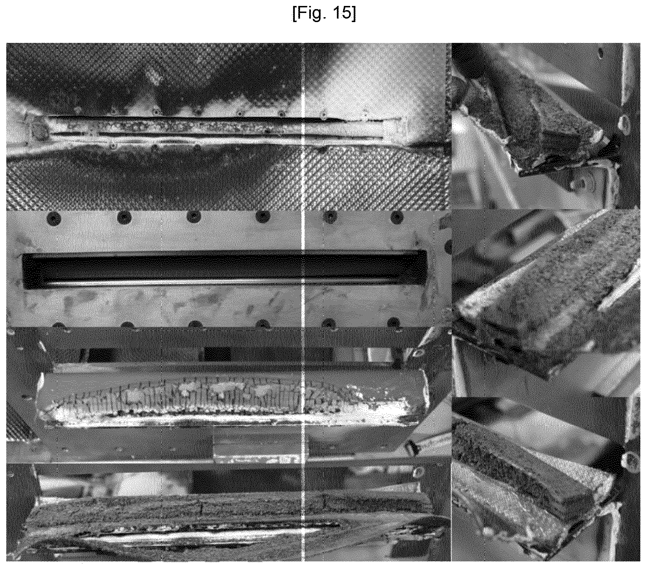

   [fig. 15] contient sept photographies montrant un échantillon de joint selon les figures 8-9 de l'invention et les éléments structuraux adjacents à cet échantillon, à l'issue d'un test de feu mis en œuvre selon la norme ISO 2685:1998.
**Fig. 16**

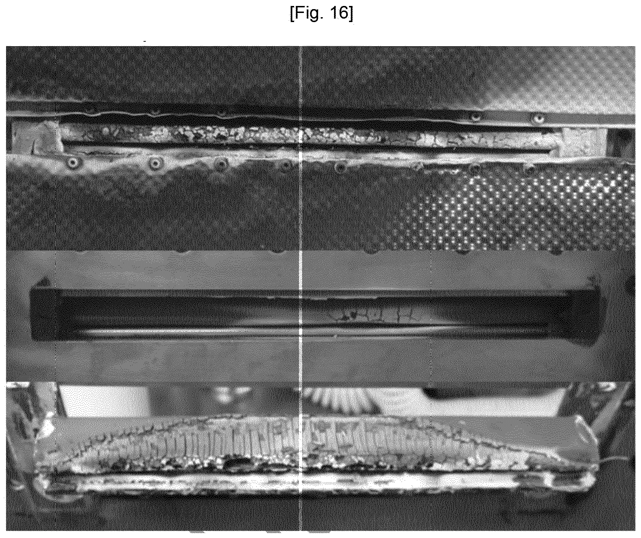

   [fig. 16] contient trois photographies montrant un échantillon de joint « témoin » selon la figure 7 et les éléments structuraux adjacents à cet échantillon, à l'issue d'un test de feu mis en œuvre selon la norme ISO 2685:1998.

### Exemples de réalisation de l'invention

Le joint d'étanchéité 10 selon l'invention visible à la figure 1 est monté en compression entre deux éléments structuraux 1 et 2 en regard à étanchéifier, et il comprend :
- un corps de joint 11 tubulaire de section transversale en Ω fermé, définissant une cavité 10A entre son sommet arrondi 11A et sa base plane 11B qui appuient de manière étanche contre les élément 1 et 2, respectivement, et
- une structure antifeu 12 disposée dans cet exemple sur la face interne de la base 11B du corps de joint 11, sur toute la largeur transversale de la base 11B (au contact de la paroi arrondie de la cavité 10A surmontant la base 11B) et qui occupe à l'état non expansé et au repos du corps de joint 11 une fraction réduite de la hauteur transversale H de la cavité 10A.

A titre indicatif, la structure antifeu 12 est par exemple de section rectangulaire (i.e. de géométrie globalement parallélépipédique sur la longueur de la cavité 10A), et cette fraction occupée par la structure antifeu 12 est par exemple comprise entre 5 et 20 % seulement de ladite hauteur H (qui est définie de la face interne de la base 11B à celle du sommet 11A de la cavité 10A).

Comme expliqué ci-dessus, le corps de joint 11 est par exemple constitué en totalité ou en partie d'un matériau élastomère à base d'un caoutchouc silicone, dans lequel matériau est optionnellement noyée au moins une nappe de tissu de renforcement. Quant à la structure antifeu 12, elle est par exemple constituée d'une masse intumescente formée d'une composition de caoutchouc à base d'un caoutchouc silicone et comprenant en outre :
- une matière organique ou inorganique expansible apte à conférer à la composition une température de déclenchement d'intumescence d'au moins 270° C, constituée de préférence d'un graphite expansible,
- un système retardateur de flamme comprenant des agents d'ignifugation,
- optionnellement une charge renforçante, et
- un système de réticulation à chaud comprenant un peroxyde.

Après intumescence de la structure antifeu 12 lors d'un feu à bord de l'aéronef, on voit à la figure 2 que la structure 12 occupe à l'état expansé sensiblement la totalité de la hauteur H et du volume interne de la cavité 10A, avec en outre l'exercice d'une force multidirectionnelle (globalement radiale dans cet exemple) sur la paroi de la cavité 10A par la structure 12 expansée, laquelle est réduite à l'état de char par la réaction de combustion, ce qui a pour effet de conférer une raideur supplémentaire au corps de joint 11 lors du feu.

Le joint d'étanchéité 10 en Ω selon l'invention visible à la figure 3 se distingue essentiellement de celui de la figure 1, en ce que sa structure antifeu 12 est calée entre deux talons verticaux 11a et 11b reliant la face interne 11c de la base 11B à la portion arrondie de la cavité 10A.

Le joint d'étanchéité 10 selon l'invention visible à la figure 4 comprend un corps de joint 11 en P, et une structure antifeu 12 par exemple de section rectangulaire disposée à l'intérieur de la cavité 10A tubulaire du « P », sur la face interne 11c d'une base 11B de cette cavité 10A (i.e. dans le prolongement de la jambe du « P »). Comme le montre la figure 4, la structure antifeu 12 peut être montée au jeu près au contact de la paroi arrondie de la cavité 10A du « P ».

Le joint d'étanchéité 10 selon l'invention visible à la figure 5 est de type soufflet pour deux conduits radialement interne et externe, respectivement. Le joint 10 comprend un corps de joint 11 à double paroi, et une structure antifeu 12 formée d'un revêtement disposé à l'intérieur de la cavité 10A annulaire, sur une face interne de la paroi externe 11B' du corps de joint 11. La structure antifeu 12 peut ainsi s'étendre sur toute la circonférence de la paroi externe 11B' du joint 10.

Le corps de joint en Ω illustré dans le détail à la figure 6 est similaire au corps de joint 11 de la figure 1, avec :
- sa base globalement plane 11B pourvue sur sa face externe d'une paire de pattes extérieures de montage (pattes inférieures à la figure 6, définissant une largeur transversale externe de 40,3 mm pour la base) pour le montage en appui du corps de joint 11 sur un élément structural 2 tel que celui de la figure 1, et
- sa paroi arrondie définissant la cavité 10A à partir de cette base 11B, cette paroi (d'épaisseur 1,5 mm) étant dans cet exemple globalement en forme d'ellipse de grand axe (i.e. largeur transversale) égal à 40 mm et de petit axe (i.e. hauteur transversale) égal à 29 mm environ, et présentant latéralement un orifice circulaire.

Comme illustré à la figure 7, on a confectionné des échantillons d'un corps de joint 11 suivant la géométrie et les dimensions de la figure 6 en noyant, dans un matériau élastomère à base d'un caoutchouc silicone PVMQ, une nappe 11d d'un tissu de verre, de sorte la nappe 11d s'étende dans la masse de la paroi arrondie de la cavité 10A sur sa circonférence elliptique et sur la longueur de la cavité 10A. On a ainsi obtenu des échantillons du joint d'étanchéité « témoin » de la figure 7, uniquement constitués de ce corps de joint 11 (sans structure antifeu à l'intérieur).

Comme illustré à la figure 8, on a ajouté au corps de joint 11 de la figure 7 (en matériau élastomère à base dudit caoutchouc silicone, dans lequel est noyée une nappe 11d de tissu de verre pour son renforcement) une structure antifeu 12 selon l'invention, i.e. telle que décrite ci-dessus en référence à la figure 1. La structure antifeu 12 était constituée d'une masse intumescente de section globalement rectangulaire (i.e. de géométrie globalement parallélépipédique sur la longueur de la cavité 10A), avec une largeur et une hauteur de 20 mm et 6 mm, respectivement. On a ainsi obtenu des échantillons du joint 10 selon l'invention de la figure 8, constitué du même corps de joint 11 qu'à la figure 7 et de la structure antifeu 12 à l'intérieur, ce joint 10 étant visible à la photographie de la figure 9.

On a préparé la masse intumescente de la structure antifeu 12 de ce joint 10 selon l'invention comme décrit ci-après.

La formulation de cette masse intumescente est indiquée au tableau 1 ci-après, représentative d'un exemple de ladite première composition selon l'invention.

**[tableau 1]**

| **Nature des produits** | **Caractéristiques** | **Formulation (pce)** |
|---|---|---|
| Système retardateur de flamme | Voir tableau 2 | 15,40 |
| Caoutchouc silicone | PVMQ | 100,00 |
| Graphite expansible | GHL 95 HT 270 | 15,40 |
| Fibres minérales | « LAPINUS » CF-50 | 23,10 |
| Agent de réticulation | Peroxyde de dicumyle | 0,2 |
| **Total (pce)** | | **154,1** |

Plus précisément, parmi ces ingrédients :
- le silicone PVMQ (tel que défini dans ASTM D-1418, également appelé PMVQ) était un polydiméthylsiloxane phénylé (terpolymère phénylmethyl-, vinylméthyl- et diméthylsiloxane qui, à l'état non réticulé, était translucide, présentait une densité de 1,22 ± 0.03, et une plasticité Williams mesurée selon ASTM 926 égale à 400),
- le GHL 95 HT 270 était un grade de graphite expansible à une température de déclenchement de 270°C,
- les fibres minérales « Lapinus » CF 50 de renforcement de la composition étaient constituées de fibres de roche de longueur moyenne de 500 +/- 150 µm et de diamètre D90 de 7 µm, et
- le système retardateur de flamme utilisé était un mélange de plusieurs composés et agents d'ignifugation pré-dispersés dans une huile silicone, pour faciliter leur dispersion lors du mélangeage de la composition de caoutchouc.

La composition du système retardateur de flamme est indiquée au tableau 2 ci-après.

**[tableau 2]**

| **Système retardateur de flamme** | **Fractions massiques (%)** |
|---|---|
| Quartz - dioxyde de titane - noir de carbone | 40,0 - 70,0 |
| Diméthyl siloxane, à extrémité diméthylvinyl | 15,0 - 40,0 |
| Hydroxyde de cérium | 3,0 - 7,0 |
| Polydiméthyl siloxane à extrémité hydroxy | 3,0 - 7,0 |
| Diméthyl, méthylvinyl siloxane, à extrémité diméthylvinyl | 3,0 - 7,0 |
| Platine | 115 ppm |

On a mesuré les propriétés suivantes de la composition de caoutchouc obtenue par mélangeage thermomécanique des ingrédients précités, dont les valeurs sont recensées au tableau 3 ci-après. On a utilisé pour ce mélangeage un mélangeur tangentiel Haake^{®} de volume utile 250 cm^{3,} avec un coefficient de remplissage égal à 1, étant précisé que l'on a mis en œuvre ce mélangeage à une température de 30° C pendant une durée de mélangeage de 2 min. 30 s.

**[tableau 3]**

| **Propriétés de la composition de caoutchouc obtenue** | |
|---|---|
| Viscosité Mooney ML(1+4) à 40° C | 20 points |
| Taux d'expansion volumique suite à une intumescence en étuve (15 min. à 600° C) | 875 % |
| Propriétés mécaniques du char obtenu par intumescence (qualitatives) | Limitées - char friable |
| Fluage en étuve, sans charge : 1 h à 250° C | 0% |
| Test d'inflammabilité verticale selon la norme FAR25.853 Annexe F partie 1 (a) (1) (i) : temps d'inflammation de 60 secondes | Aucune flamme résiduelle - le mélange s'éteint directement après le retrait de la flamme de méthane |

Ces propriétés de la composition de caoutchouc obtenue à l'état non réticulé (viscosité Mooney et fluage) et partiellement réticulé (taux d'expansion, propriétés mécaniques et inflammabilité) étaient bien adaptées, pour l'obtention d'une barrière au feu du joint 10 selon l'invention incorporant une structure antifeu 12 constituée de cette composition.

La figure 10 illustre le résultat d'une analyse par ATG (effectuée sous N₂ avec une rampe de températures de 20° C/min.) montrant la perte de poids avec la température de deux compositions de caoutchouc intumescentes selon l'invention, la première composition étant à base du PVMQ précité et la seconde composition à base d'un VMQ. Le VMQ utilisé pour la seconde composition, à l'état non réticulé, était un solide incolore de masse volumique de 1,10 g/cm³ (mesurée selon la norme DIN 53 479 A) et de viscosité ML(4) à 25° C égale à 26, et cette seconde composition présentait à l'exception du VMQ la même formulation en termes d'ingrédients et de quantités que celle de la première composition des tableaux 1-2 à base du PVMQ.

Cette analyse par ATG de la figure 10 montre que la première composition à base du PVMQ présentait un résidu après dégradation thermique plus lourd que celui de la seconde composition à base du VMQ. Plus précisément, on voit sur ce graphique qu'à partir de 600° C environ le poids du résidu à base de PVMQ décroît moins rapidement avec la température que pour le résidu à base de VMQ, avec à 900° C une perte de poids d'environ 25 % pour le résidu à base de PVMQ contre près de 40 % pour le résidu à base de VMQ. La Demanderesse a ainsi démontré que l'ajout du groupe phényle dans la chaîne polymérique du caoutchouc silicone augmente la stabilité thermique de la masse intumescente.

Comme illustré à la figure 11, l'analyse par un rhéomètre plan/plan de la première composition de caoutchouc selon l'invention à base du PVMQ selon les tableaux 1-3, avec un balayage en température de 23 à 380° C suivant une rampe de températures de 10° C /min. avec 1 % de déformation et par pilotage de la force normale (Fn de 0,07 N, soit une pression de 200 Pa), a montré les deux transitions suivantes :
- entre 160 et 220° C, une première transition correspondant à une réticulation partielle de la composition de caoutchouc, et
- à partir de 340° C environ, une seconde transition correspondant à l'expansion de la composition de caoutchouc.

L'analyse illustrée par la figure 11 établit que le déclenchement de l'intumescence de la première composition de caoutchouc a eu lieu au-delà de 270 °C, à au moins 340° C. Ce graphique établit en outre que la force normale exercée sur le plateau supérieur lors de l'expansion de la première composition de caoutchouc était linéaire et non saccadée, et que l'intégrité mécanique de la première composition expansée selon l'invention a été maintenue jusqu'à la fin de l'analyse.

On a utilisé pour les tests de feu portant sur le joint d'étanchéité 10 selon l'invention des figures 8-9 et 10-11 avec la structure antifeu 12 décrite ci-dessus en relation avec les tableaux 1-3, d'une part, et sur le joint d'étanchéité « témoin » 11 de la figure 7 dépourvu de structure antifeu, d'autre part, un banc d'essais selon la norme ISO 2685:1998 qui est schématisé à la figure 12 et qui montre notamment, en relation avec chaque échantillon de joint selon l'invention et « témoin » testé :
a) un brûleur de carburant (i.e. de kérosène),
b) des thermocouples de type K pour mesurer la température pendant l'étape 1 de calibration de la flamme générée par le brûleur, ces thermocouples K étant distants de 100 mm du brûleur,
c) un dispositif de calorimétrie, comprenant un tube de cuivre et des thermocouples de type PT 100 formant un calorimètre utilisé pour calculer le flux thermique afin de calibrer la flamme pendant l'étape 2 de calibration du flux thermique de la flamme, et un débitmètre pour mesurer le débit d'eau dans ce tube pendant l'étape 2,
d) un appareil photo numérique et trois caméras vidéo (agencées à l'avant et à l'arrière du dispositif de test), lesquelles caméras sont visibles à la figure 13,
e) un dispositif de test (visible à la figure 14) comprenant un assemblage et des cales de réglage supportant en compression chaque échantillon de joint à tester lors de l'étape 3 de test, à une distance de 100 mm du brûleur, et
f) une table vibrante pour communiquer à chaque échantillon testé les vibrations requises par la norme ISO 2685:1998.

Les conditions suivies pour ces tests de feu étant celles prescrites dans la norme ISO 2685:1998, elles ne seront pas détaillées ci-après, étant seulement précisé que chaque test de feu, mis en œuvre pendant 15 minutes, a soumis l'échantillon de joint testé à :
(i) la chaleur engendrée par une flamme calibrée de kérosène à 1100° C ± 80° C avec une densité de flux thermique absorbé par l'appareillage normalisé décrit en B.4.2 de la norme ISO 2685:1998 qui est de 116 ± 10 kW/m2, et à
(ii) des vibrations de 50 Hz et 0,8 mm pic à pic telles que décrites dans cette même norme.

On a disposé une caméra thermique à l'arrière de chaque assemblage pour mesurer les températures à l'arrière de chaque échantillon « témoin » et selon l'invention testé (i.e. du côté opposé à la flamme, voir côté gauche de la figure 13 par rapport au dispositif de test équipé des deux caméras vidéo), et l'on a ainsi obtenu les températures recensées au tableau 4 ci-après pour la face arrière de chaque échantillon en fonction du temps de feu écoulé (de 1 à 16 minutes).

**[Tableau 4]**

| **Temps de feu écoulé (min.)** | **Température à l'arrière du joint selon l'invention (° C)** | **Température à l'arrière du joint « témoin » (° C)** |
|---|---|---|
| 1 | - | 125,3 |
| 2 | 166,2 | 161,8 |
| 3 | 180,4 | 172,4 |
| 4 | 189,1 | 215,9 |
| 5 | 202,3 | 244,4 |
| 6 | 225,1 | 265,9 |
| 7 | 244,8 | 288,6 |
| 8 | 263,1 | 320,7 |
| 9 | 276,2 | 343,6 |
| 10 | 290,0 | 340,3 |
| 11 | 304,0 | 351,5 |
| 12 | 314,7 | 397,1 |
| 13 | 324,3 | - |
| 14 | 331,0 | - |
| 15 | 333,4 | - |
| 16 | 326,7 | |

Ces mesures de température à l'arrière de chaque échantillon de joint ont mis en évidence :
- pour l'échantillon de joint « témoin », la destruction (i.e. désintégration par combustion de sa face arrière opposée à la flamme) du joint après 12 minutes et 19 secondes du test de feu, et
- pour l'échantillon de joint selon l'invention, le passage avec succès du test de feu vu que cet échantillon a conservé sa face arrière après 15 minutes du test de feu (cette face arrière, non détruite, était à une température modérée d'environ 330° C après 15 minutes, en comparaison de la température de près de 400° C de la face arrière du joint « témoin » après 12 minutes).

En conclusion, et comme cela est confirmé par les photographies des figures 15-16, le joint 10 selon l'invention à structure antifeu 12 présente une résistance au feu (effet barrière et protection du corps de joint 11 en limitant l'échauffement de sa paroi) très significativement améliorée par rapport au joint « témoin » sans structure antifeu.

En effet, on voit à la figure 15 qu'après les 15 min. de test, la face arrière du corps 11 du joint 10 selon l'invention n'a pas été désintégrée (voir à la figure 15 la troisième photographie de gauche à partir du haut), tout comme le char formant le résidu de la structure antifeu 12 qui a joué son rôle de barrière au feu au contact du corps de joint 11 (ce char selon l'invention est visible à la photographie du bas à gauche et aux trois photographies de droite de la figure 15). Contrairement au joint 10 selon l'invention, le joint « témoin » 11 a eu sa face arrière en grande partie détruite après les 12 min. du test de feu, comme visible à la troisième photographie de la figure 16 à partir du haut.

## Revendications

1. Joint d'étanchéité (10), comprenant :
- un corps de joint (11) au moins en partie élastomère, le corps de joint (11) définissant au moins une cavité (10A) globalement tubulaire ou annulaire, et
- une structure antifeu (12) qui est distincte du corps de joint (11) et qui est disposée à l'intérieur de ladite au moins une cavité (10A), la structure antifeu (12) comprenant au moins une masse intumescente apte à remplir ladite au moins une cavité (10A) dans un état expansé,
dans lequel ladite au moins une masse intumescente est constituée d'une composition de caoutchouc présentant une température de déclenchement d'intumescence égale ou supérieure à 270° C, mesurée par un rhéomètre rotatif plan-plan avec un balayage en température de 23 à 380° C suivant une rampe de températures de 10° C/min. avec 1 % de déformation et avec évolution, à partir de 23° C, de la force normale Fn à partir de 0,07 N et de l'entrefer h entre plans à partir de 2 mm, et
dans lequel le joint d'étanchéité (10) est conçu pour raccorder deux éléments structuraux (1 et 2) l'un à l'autre en une zone d'un aéronef qui est choisie parmi les zones de réacteurs principaux et de moteurs auxiliaires, dont la température en l'absence de feu peut varier de -55° C à 250° C et qui est désignée comme zone de feu selon la norme ISO 2685:1998 ou AC 20-135.

2. Joint d'étanchéité (10) selon la revendication 1, dans lequel ladite température de déclenchement d'intumescence est comprise entre 280 et 400° C, de préférence entre 320 et 360° C.

3. Joint d'étanchéité (10) selon la revendication 1 ou 2, dans lequel la composition de caoutchouc présente, à l'état expansé, un taux d'expansion volumique égal ou supérieur à 800 %, mesuré pendant 15 min. à 600° C +/- 10° C dans un four à moufle Nabertherm^{®} N17/HR de volume utile égal à 17 dm³ sur une éprouvette de section circulaire de 25 mm de diamètre constituée de la composition de caoutchouc, le taux d'expansion étant calculé par la formule ((E_{f}-Eᵢ)/Eᵢ).100 avec Eᵢ désignant l'épaisseur initiale de l'éprouvette égale à 2 mm et E_{f} l'épaisseur finale de l'éprouvette.

4. Joint d'étanchéité (10) selon une des revendications précédentes, dans lequel la composition de caoutchouc est à base d'au moins un caoutchouc silicone, de préférence un terpolymère dérivé de phénylmethyl-, vinylméthyl- et diméthylsiloxane (PVMQ).

5. Joint d'étanchéité (10) selon la revendication 4, dans lequel la composition de caoutchouc comprend en outre :
- une matière organique ou inorganique expansible apte à conférer à la composition de caoutchouc ladite température de déclenchement d'intumescence, comprenant de préférence un graphite expansible,
- un système retardateur de flamme, comprenant des agents d'ignifugation,
- optionnellement une charge renforçante, et
- un système de réticulation comprenant un peroxyde, la composition de caoutchouc n'étant pas réticulée ou étant réticulée seulement en partie.

6. Joint d'étanchéité (10) selon la revendication 5, dans lequel la composition de caoutchouc comprend, pour 100 pce dudit au moins un caoutchouc silicone (pce : parties en poids pour 100 parties d'élastomère(s)) :
- ladite matière organique ou inorganique expansible selon une quantité comprise entre 10 et 20 pce, de préférence entre 13 et 17 pce dudit graphite expansible,
- ledit système retardateur de flamme selon une quantité comprise entre 10 et 20 pce, ledit système retardateur de flamme comprenant par exemple :
du quartz selon une fraction massique de 15 à 40 %,
un oxyde métallique selon une fraction massique de 15 à 40 %, de préférence du dioxyde de titane,
du diméthyl siloxane à groupe terminal diméthylvinyl selon une fraction massique de 15 à 40 % ;
- optionnellement à titre de ladite charge renforçante, des fibres minérales telles que des fibres de roche, selon une quantité comprise entre 18 et 28 pce ; et
- ledit peroxyde selon une quantité comprise entre 0,05 et 0,5 pce, par exemple entre 0,1 et 0,3 pce, ledit peroxyde étant de préférence un peroxyde organique aromatique, par exemple un peroxyde de dicumyle.

7. Joint d'étanchéité (10) selon une des revendications précédentes, dans lequel la composition de caoutchouc présente, à l'état non réticulé, une viscosité Mooney ML(1+4) à 40° C, mesurée selon la norme ASTM D-1646, qui est comprise entre 15 et 25 et par exemple entre 18 et 22.

8. Joint d'étanchéité (10) selon une des revendications précédentes, dans lequel la composition de caoutchouc, à l'état expansé, est à l'épreuve du test d'inflammabilité verticale selon la norme FAR25.853, Annexe F partie I (a) (1) (i), la composition de caoutchouc ne présentant aucune flamme résiduelle après le retrait d'une flamme de méthane pendant un temps d'inflammation de 60 secondes.

9. Joint d'étanchéité (10) selon une des revendications précédentes, dans lequel la structure antifeu (12) comprend en outre une enveloppe qui est séparée du corps de joint et qui encapsule ladite au moins une masse intumescente notamment pour la protéger de fluides environnants, l'enveloppe étant par exemple à base d'un caoutchouc silicone non réticulé.

10. Joint d'étanchéité (10) selon une des revendications précédentes, dans lequel la structure antifeu (12) est disposée sur une zone interne du corps de joint (11) indépendante de l'étanchéité assurée par le joint (10) sans que la structure antifeu (12) soit fixée au corps de joint (11), la structure antifeu (12) présentant, dans un état non expansé avant intumescence de ladite au moins une masse intumescente, une géométrie globalement parallélépipédique de préférence définie par une largeur le long d'une dimension transversale de ladite au moins une cavité (10A), par une hauteur perpendiculaire et inférieure à ladite largeur et par une longueur par exemple égale à celle de ladite au moins une cavité (10A).

11. Joint d'étanchéité (10) selon une des revendications précédentes, dans lequel le corps de joint (11) est constitué en totalité ou en partie d'un matériau élastomère à base d'au moins un caoutchouc silicone, de préférence un terpolymère dérivé de phénylmethyl-, vinylméthyl- et diméthylsiloxane (PVMQ), le corps de joint (11) étant par exemple choisi parmi les joints tubulaires de section transversale en Ω, de section transversale en P, et parmi les soufflets annulaires pour conduits.

12. Joint d'étanchéité (10) selon la revendication 11, dans lequel le corps de joint (11) est constitué dudit matériau élastomère, étant dépourvu de couche de renforcement noyée dans ledit matériau élastomère.

13. Joint d'étanchéité (10) selon la revendication 11, dans lequel le corps de joint (11) est constitué d'un composite comprenant ledit matériau élastomère et au moins une nappe (11d) d'un tissu, ladite au moins une nappe (11d) étant noyée dans ledit matériau élastomère et étant choisie parmi des tissus de verre, des tissus de polyamides aromatiques et leurs combinaisons.

14. Joint d'étanchéité (10) selon une des revendications précédentes, dans lequel le joint d'étanchéité (10) est à l'épreuve du feu selon la norme ISO 2685:1998, étant capable de résister pendant 15 minutes :
- à la chaleur engendrée par une flamme calibrée de kérosène à 1100° C ± 80° C avec une densité de flux thermique absorbé par l'appareillage normalisé décrit en B.4.2 de la norme ISO 2685:1998 qui est de 116 ± 10 kW/m², et
- à des vibrations de 50 Hz et 0,8 mm pic à pic telles que décrites dans la norme ISO 2685:1998.

15. Aéronef, en particulier avion ou hélicoptère, comprenant :
- au moins une paire d'éléments structuraux (1 et 2) métalliques ou composites conçus pour être raccordés l'un à l'autre en au moins une zone de l'aéronef désignée comme zone de feu par exemple selon le § 2.1 de la norme ISO 2685:1998, ladite au moins une zone étant de préférence choisie parmi les zones de réacteurs principaux et de moteurs auxiliaires de l'aéronef, comme par exemple les zones d'un moteur, d'une nacelle, d'un pylône et/ou d'un groupe auxiliaire de puissance, et
- au moins un joint d'étanchéité (10) qui relie de manière étanche les éléments structuraux (1 et 2) de ladite au moins une paire l'un à l'autre,
dans laquelle ledit au moins un joint d'étanchéité (10) est tel que défini à l'une des revendications précédentes.

## Patentansprüche

1. Dichtung (10), umfassend:
- einen wenigstens teilweise elastomeren Dichtungskörper (11), wobei der Dichtungskörper (11) wenigstens einen im Wesentlichen röhrenförmigen oder ringförmigen Hohlraum (10A) definiert, und
- eine Brandschutzstruktur (12), die sich vom Dichtungskörper (11) unterscheidet und die innerhalb des wenigstens einen Hohlraums (10A) angeordnet ist, wobei die Brandschutzstruktur (12) wenigstens eine intumeszierende Masse umfasst, die in der Lage ist, den wenigstens einen Hohlraum (10A) in einem expandierten Zustand zu füllen, wobei die wenigstens eine intumeszierende Masse aus einer Kautschukzusammensetzung besteht, die eine Intumeszenzauslösetemperatur von 270 °C oder mehr aufweist, gemessen mit einem Rotationsrheometer Ebene-Ebene mit einem Temperaturscanning von 23 bis 380 °C bei einer Temperaturrampe von 10 °C/min. mit 1 % Verformung und mit einer Entwicklung der Normalkraft Fn ab 23 °C ab 0,07 N und des Luftspalts h zwischen den Ebenen ab 2 mm, und wobei die Dichtung (10) dazu bestimmt ist, zwei Strukturelemente (1 und 2) in einem Bereich eines Flugzeugs zu verbinden, der aus den Bereichen der Haupttriebwerke und Hilfstriebwerke gewählt ist, deren Temperatur ohne Feuer zwischen -55 °C und 250 °C variieren kann und der nach der Norm ISO 2685:1998 oder AC 20-135 als Brandbereich bezeichnet ist.

2. Dichtung (10) nach Anspruch 1, wobei die Auslösetemperatur für die Intumeszenz zwischen 280 und 400 °C, bevorzugt zwischen 320 und 360 °C, liegt.

3. Dichtung (10) nach Anspruch 1 oder 2, wobei die Kautschukzusammensetzung im expandierten Zustand einen Volumenausdehnungsgrad von größer gleich 800 % aufweist, gemessen über 15 min. bei 600 °C +/- 10 °C in einem Muffelofen Nabertherm^{®} N17/HR mit einem Nutzvolumen von 17 dm³ an einem Prüfkörper mit kreisförmigem Querschnitt von 25 mm Durchmesser, der aus der Kautschukzusammensetzung besteht, wobei der Expansionsgrad nach der Formel ((E_{f}-Eᵢ)/Eᵢ).100 berechnet wird, wobei Eᵢ die Anfangsdicke des Prüfkörpers von 2 mm und E_{f} die Enddicke des Prüfkörpers bezeichnet.

4. Dichtung (10) nach einem der vorstehenden Ansprüche, wobei die Kautschukzusammensetzung auf wenigstens einem Silikonkautschuk basiert, bevorzugt einem Terpolymer, das aus Phenylmethyl-, Vinylmethyl- und Dimethylsiloxan (PVMQ) abgeleitet ist.

5. Dichtung (10) nach Anspruch 4, wobei die Kautschukzusammensetzung ferner umfasst:
- ein expandierbares organisches oder anorganisches Material, das der Kautschukzusammensetzung die genannte Auslösetemperatur für die Intumeszenz verleihen kann, bevorzugt ein expandierbares Graphit,
- ein flammhemmendes System, das Flammschutzmittel umfasst,
- optional einen verstärkenden Füllstoff, und
- ein Vernetzungssystem, das ein Peroxid umfasst, wobei die Kautschukzusammensetzung nicht oder nur teilweise vernetzt ist.

6. Dichtung (10) nach Anspruch 5, wobei die Kautschukzusammensetzung pro 100 pce des wenigstens einen Silikonkautschuks (pce: Gewichtsteile pro 100 Teile Elastomer(e)) umfasst:
- das expandierbare organische oder anorganische Material in einer Menge zwischen 10 und 20 pce, bevorzugt zwischen 13 und 17 pce des expandierbaren Graphits,
- das flammhemmende System in einer Menge zwischen 10 und 20 pce, wobei das flammhemmende System beispielsweise umfasst:
Quarz in einem Massenanteil von 15 bis 40 %,
ein Metalloxid in einem Massenanteil von 15 bis 40 %, bevorzugt Titandioxid,
Dimethylsiloxan mit einer Dimethylvinyl-Endgruppe in einem Massenanteil von 15 bis 40 %;
- optional als verstärkenden Füllstoff Mineralfasern wie Steinwollefasern in einer Menge zwischen 18 und 28 pce; und
- das Peroxid in einer Menge zwischen 0,05 und 0,5 pce, beispielsweise zwischen 0,1 und 0,3 pce, wobei das Peroxid bevorzugt ein aromatisches organisches Peroxid ist, beispielsweise ein Dicumylperoxid.

7. Dichtung (10) nach einem der vorstehenden Ansprüche, wobei die Kautschukzusammensetzung im unvernetzten Zustand bei 40 °C eine Mooney-Viskosität ML(1+4) nach ASTM D-1646 aufweist, die zwischen 15 und 25 und beispielsweise zwischen 18 und 22 liegt.

8. Dichtung (10) nach einem der vorstehenden Ansprüche, wobei die Kautschukzusammensetzung im expandierten Zustand den vertikalen Entflammbarkeitstest nach der Norm FAR25.853, Anhang F Teil I (a) (1) (i) besteht, wobei die Kautschukzusammensetzung nach Entfernen einer Methanflamme während einer Entzündungszeit von 60 Sekunden keine Restflamme aufweist.

9. Dichtung (10) nach einem der vorstehenden Ansprüche, wobei die Brandschutzstruktur (12) ferner eine Hülle umfasst, die vom Dichtungskörper getrennt ist und die wenigstens eine intumeszierende Masse umschließt, insbesondere um sie vor umgebenden Flüssigkeiten zu schützen, wobei die Hülle beispielsweise auf einem unvernetzten Silikongummi basiert.

10. Dichtung (10) nach einem der vorstehenden Ansprüche, wobei die Brandschutzstruktur (12) in einem inneren Bereich des Dichtungskörpers (11) angeordnet ist, der von der durch die Dichtung (10) gewährleisteten Abdichtung unabhängig ist, ohne dass die Brandschutzstruktur (12) am Dichtungskörper (11) befestigt ist, wobei die Brandschutzstruktur (12) in einem nicht expandierten Zustand vor der Intumeszenz der wenigstens einen intumeszierenden Masse eine im Wesentlichen parallelepipedische Geometrie aufweist, die bevorzugt durch eine Breite entlang einer Querabmessung des wenigstens einen Hohlraums (10A), durch eine Höhe, die senkrecht zu dieser Breite und kleiner als diese ist, und durch eine Länge, die beispielsweise der des wenigstens einen Hohlraums (10A) entspricht, definiert ist.

11. Dichtung (10) nach einem der vorstehenden Ansprüche, wobei der Dichtungskörper (11) ganz oder teilweise aus einem elastomeren Material auf der Basis von wenigstens einem Silikonkautschuk, bevorzugt einem Terpolymer, abgeleitet von Phenylmethyl-, Vinylmethyl- und Dimethylsiloxan (PVMQ) besteht, wobei der Dichtungskörper (11) beispielsweise aus Rohrdichtungen mit Ω-Querschnitt, P-Querschnitt und aus ringförmigen Faltenbälgen für Leitungen gewählt ist.

12. Dichtung (10) nach Anspruch 11, wobei der Dichtungskörper (11) aus dem Elastomermaterial besteht und keine in das Elastomermaterial eingebettete Verstärkungsschicht aufweist.

13. Dichtung (10) nach Anspruch 11, wobei der Dichtungskörper (11) aus einem Verbundwerkstoff besteht, der das Elastomermaterial und wenigstens eine Lage (11d) eines Gewebes umfasst, wobei wenigstens eine Lage (11d) in das Elastomermaterial eingebettet ist und aus Glasgeweben, aromatischen Polyamidgeweben und deren Kombinationen gewählt ist.

14. Dichtung (10) nach einem der vorstehenden Ansprüche, wobei die Dichtung (10) nach der Norm ISO 2685:1998 feuerfest ist und 15 Minuten lang folgenden Einwirkungen standhalten kann:
- der von einer kalibrierten Kerosin-Flamme bei 1100 °C ± 80 °C erzeugten Wärme mit einer Dichte des thermischen Flusses, die von dem in B.4.2 der Norm ISO 2685: 1998 beschriebenen genormten Gerät absorbiert werden kann, die 116 ± 10 kW/m² beträgt, und
- Vibrationen von 50 Hz und 0,8 mm Spitze-Spitze nach der Norm ISO 2685:1998 standhalten kann.

15. Flugzeug, insbesondere Flugzeug oder Hubschrauber, umfassend:
- wenigstens ein Paar metallischer oder aus Verbundwerkstoffen bestehender Strukturelemente (1 und 2), die dazu ausgelegt sind, in wenigstens einem Bereich des Flugzeugs miteinander verbunden zu werden, der beispielsweise nach § 2.1 der Norm ISO 2685: 1998 als Feuerbereich definiert ist, wobei der wenigstens eine Bereich bevorzugt aus den Bereichen der Haupttriebwerke und Hilfstriebwerke des Flugzeugs gewählt ist, wie beispielsweise den Bereichen eines Triebwerks, einer Gondel, eines Pylons oder einer Hilfstriebwerksgruppe, und
- wenigstens eine Dichtung (10), die die Strukturelemente (1 und 2) des wenigstens einen Paares dicht miteinander verbindet, wobei die wenigstens eine Dichtung (10) so beschaffen ist, wie in einem der vorstehenden Ansprüche definiert.

## Claims

1. Seal (10), comprising:
- a seal body (11) at least in part elastomeric, the seal body (11) defining at least one roughly tubular or annular cavity (10A), and
a fire-resistant structure (12) that is separate from the seal body (11) and is located within said at least one cavity (10A), the fire-resistant structure (12) comprising at least one intumescent mass capable of filling said at least one cavity (10A) in an expanded state,
wherein said at least one intumescent mass is composed of a rubber composition that has an intumescence-triggering temperature equal to or greater than 270°C, as measured by a surface-surface rotational rheometer with a temperature scan ranging from 23 to 380°C, in a temperature ramp of 10°C/min, with 1% deformation, and with the change, starting from 23° C, of the normal force Fn from 0.07 N and of the air gap h between the planes from 2 mm, and
wherein the seal (10) is designed to connect two structural elements (1 and 2) to one another in a zone of an aircraft selected from the zones of main engines and auxiliary engines, where the temperature in the absence of fire may range from -55°C to 250°C and which is designated as a fire zone in accordance with ISO 2685:1998 or AC 20-135.

2. The seal (10) according to claim 1, wherein said intumescence trigger temperature is comprised between 280 and 400°C, preferably between 320 and 360°C.

3. Seal (10) according to claim 1 or 2, wherein the rubber composition has, in the expanded state, a volumetric expansion ratio equal to or higher than 800%, measured for 15 min, at 600°C +/- 10°C in a Nabertherm^{®} N17/HR muffle furnace with a useful volume equal to 17 dm³ on a test sample with a circular cross-section with a 25 mm diameter made of the rubber composition, the expansion ratio being calculated by the formula ((Ef-Ei)/Ei). 100 with Eᵢ denoting the initial thickness of the test piece equal to 2 mm and E_{f} the final thickness of the test piece.

4. The seal (10) according to one of the preceding claims, wherein the rubber composition is based on at least one silicone rubber, preferably a terpolymer derived from phenylmethyl-, vinylmethyl- and dimethylsiloxane (PVMQ).

5. Seal (10) according to claim 4, wherein the rubber composition further comprises:
- an expandable organic or inorganic material capable of imparting the intumescence-triggering temperature to the rubber composition, preferably comprising an expandable graphite,
- a flame retardant system, comprising fire retardants,
- optionally a reinforcing filler, and
a crosslinking system comprising a peroxide, the rubber composition being either not crosslinked or being only partially crosslinked.

6. Seal (10) according to claim 5, wherein the rubber composition comprises, for 100 pce of said at least one silicone rubber (pce: parts by weight for 100 parts of elastomer):
- said organic or inorganic material expandable in an amount between 10 and 20 pce, preferably between 13 and 17 pce of said expandable graphite,
the flame retardant system in question in a quantity ranging from 10 to 20 pce, the flame retardant system comprising, for example:
quartz in a mass fraction of 15 to 40%,
a metal oxide in a mass fraction of 15 to 40%, preferably titanium dioxide,
dimethyl siloxane with a dimethylvinyl end group in a mass fraction of 15 to 40%;
- optionally as said reinforcing filler, mineral fibres such as rock fibres, in an amount ranging from 18 to 28 pce; and
- said peroxide in an amount ranging from 0.05 to 0.5 pce, for instance between 0.1 and 0.3 pce the aforementioned peroxide being preferably an aromatic organic peroxide, for example a dicumyl peroxide.

7. The seal (10) according to one of the preceding claims, wherein the rubber composition has, in the non-crosslinked state, a Mooney viscosity ML(1+4) at 40°C, measured according to the standard ASTM D-1646, which is comprised between 15 and 25 and for example between 18 and 22.

8. Seal (10) according to one of the preceding claims, wherein the rubber composition, in the expanded state, withstands the vertical flame test according to the standard FAR25.853, Appendix F part I (a) (1) (i), the rubber composition having no residual flame after removal of a methane flame for a flammability time of 60 seconds.

9. The seal (10) according to one of the preceding claims, wherein the fire-resistant structure (12) further comprises an envelope which is separated from the seal body and which encapsulates said at least one intumescent mass in particular to protect it from surrounding fluids, the envelope being for example based on a non-crosslinked silicone rubber.

10. The seal (10) according to one of the preceding claims, wherein the fire-resistant structure (12) is disposed over an inner zone of the seal body (11) independent of the tightness ensured by the seal (10) without the fire-resistant structure (12) being fastened to the seal body (11), the fire-resistant structure (12) having, in a non-expanded state before intumescence of said at least one intumescent mass, a generally parallelepiped geometry preferably defined by a width along a transverse dimension of said at least one cavity (10A), by a height perpendicular to and smaller than said width and by a length for example equal to that of said at least one cavity (10A).

11. Seal (10) according to one of the preceding claims, wherein the seal body (11) is entirely or partially made of an elastomeric material based on at least one silicone rubber, preferably a terpolymer derived from phenylmethyl-, vinylmethyl- and dimethylsiloxane (PVMQ), the seal body (11) being for example selected from among tubular seals with a Ω cross-section, a P cross-section, and from among annular bellows for conduits.

12. The seal (10) according to claim 11, wherein the seal body (11) is made of said elastomeric material, devoid of a reinforcing layer embedded in said elastomeric material.

13. The seal (10) according to claim 11, wherein the seal body (11) is made of a composite comprising said elastomeric material and at least one ply (11d) of a fabric, said at least one ply (11d) being embedded in said elastomeric material and being selected from among glass fabrics, aromatic polyamide fabrics and combinations thereof.

14. Seal (10) according to one of the preceding claims, wherein the seal (10) withstands fire according to the standard ISO 2685:1998, being capable of withstanding for 15 minutes:
- heat generated by a kerosene calibrated flame at 1100° C ± 80° C with a heat flux density absorbed by the standardised apparatus described in B.4.2 of ISO 2685:1998 which is 116 ± 10 kW/m², and
- vibrations of 50 Hz and 0.8 mm peak to peak as described in ISO 2685:1998.

15. Aircraft, in particular an aeroplane or a helicopter, comprising:
at least one pair of metallic or composite structural elements (1 and 2) designed to be connected to each other in at least one zone of the aircraft designated as a fire zone, for example in accordance with § 2.1 of ISO 2685:1998, said at least one zone preferably being selected from the zones of the main jet engines and auxiliary engines of the aircraft, such as the zones of an engine, of a nacelle, of a strut, and/or of an auxiliary power unit, and
- at least one seal (10) that sealingly connects the structural elements (1 and 2) of said at least one pair to each other,
wherein said at least one seal (10) is as defined in one of the preceding claims.
